# EUROPEAN PATENT SPECIFICATION

(11) **EP 3 800 011 B1**
(45) Date of publication and mention of the grant of the patent: **30.03.2022**
(21) Application number: 20201940.2
(22) Date of filing: 22.12.2017
(51) Int. Cl.: B25C 1/04

(54) **AIR DUSTER STRUCTURE AND DRIVING TOOL**
LUFTBLASPISTOLENSTRUKTUR UND ANTRIEBSWERKZEUG
STRUCTURE DE DÉPOUSSIÉREUR PNEUMATIQUE ET OUTIL D'ENTRAÎNEMENT

(30) Priority: 28.12.2016 JP 2016256590
(43) Date of publication of application: 07.04.2021
(62) Divisional of application: 19166133.9
(73) Proprietor: Max Co., Ltd., Tokyo 103-8502 (JP)
(72) Inventor: KAZUYA, Mochizuki, Tokyo, 103-8502 (JP)
(74) Representative: Samson & Partner Patentanwälte mbB

(56) References cited:
- EP-A2- 1 366 863
- EP-A2- 2 402 121
- JP-A- 2013 248 735
- US-A1- 2008 087 704
- US-A1- 2008 105 729

## Description

### BACKGROUND

The present invention relates to an air duster structure that jets air from a nozzle by using externally supplied compressed air and to a driving tool provided with the air duster structure.

An air duster gun or an air duster included with a driving tool has been used in order to blow off fine wood debris and the like before performing nail driving. For example, JP-A-H10-109280 discloses a driving tool including an air duster. The related-art technique disclosed in JP-A-H10-109280 is structured so that air is jetted out of a nozzle by pushing in an operation button that opens and closes a release valve. A driving tool according to the preamble of claim 1 is disclosed in US 2008/087704 A1.

To adjust the amount of air jetted out of the nozzle according to the operation amount of the operation button in an air duster as described above, it is considered to form the release valve or a pipe line in a tapered shape to increase the area of the flow channel of the air according to the pushing amount of the operation button. At this time, if the flow amount gradually increases while the pushing amount of the operation button and the flow amount of the air maintain a proportional relationship therebetween, and the flow amount of the air is largest when the operation amount is highest, operability is excellent.

However, in actuality, as the flow amount of the air being jetted out increases, the pressure in the accumulator provided on the upstream side of the release valve decreases and the difference in the pressure between in front of and behind the throttle of the release valve becomes small, so that the change in the flow amount with respect to the change in the operation amount becomes small. This produces an inconvenience in that after the operation button is operated to a certain extent, even if the operation button is operated any further, the amount of air jetted out of the nozzle does not largely change and this deteriorates operability.

### SUMMARY

Accordingly, an object of the present invention is to provide an air duster structure for a driving tool where the adjustment of the flow of the air being jetted out is easy.

According to the invention, there is provided a tool according to claim 1.

### BRIEF DESCRIPTION OF THE DRAWINGS

FIG. 1 is a right side view of a driving tool provided with an air duster structure.
FIG. 2 is a left side view of the driving tool provided with the air duster structure.
FIG. 3 is an A-A cross-sectional view of the driving tool.
FIG. 4 is a left side view of the driving tool from which a tip cover member and a side cover member are detached.
FIG. 5A is a perspective view of the tip cover member viewed from the reverse side, and FIG. 5B is a perspective view of the tip cover member viewed from the obverse side.
FIG. 6 is a perspective view of the driving tool viewed from below.
FIG. 7 is a cross-sectional view of a flow amount adjustment mechanism according to a first embodiment, and a view of a condition where an operation portion is not operated.
FIG. 8 is a cross-sectional view of the flow amount adjustment mechanism according to the first embodiment, and a view of a condition where the operation portion is depressed all the way in.
FIGS. 9A to 9D are views explaining the operation of the flow amount adjustment mechanism according to the first embodiment, FIG. 9A is a view of the condition where the operation portion is not operated, FIG. 9B is a view of a condition where the operation portion is operated approximately 1/3 the way, FIG. 9C is a view of a condition where the operation portion is operated approximately 2/3 the way, and FIG. 9D is a view of a condition where the operation portion is fully operated.
FIG. 10 is a graph showing a relationship between the operation amount, and the flow amount and the flow channel area according to the first embodiment.
FIG. 11 is a cross-sectional view of a flow amount adjustment mechanism according to a second embodiment, and a view of a condition where the operation portion is not operated.
FIG. 12 is a cross-sectional view of the flow amount adjustment mechanism according to the second embodiment, and a view of a condition where the operation portion is depressed all the way in.
FIGS. 13A to 13E are views explaining the operation of the flow amount adjustment mechanism according to the second embodiment, FIG. 13A is a view of the condition where the operation portion is not operated, FIG. 13B is a view of a condition where the operation portion is operated approximately 1/4 the way, FIG. 13C is a view of a condition where the operation portion is operated approximately 2/4 the way, FIG. 13D is a view of a condition where the operation portion is operated approximately 3/4 the way, and FIG. 13E is a view of a condition where the operation portion is fully operated.
FIG. 14 is a graph showing a relationship between the operation amount, and the flow amount and the flow channel area according to the second embodiment.
FIG. 15 is a cross-sectional view of a flow amount adjustment mechanism according to a third embodiment, and a view of a condition where the operation portion is not operated.
FIG. 16 is a cross-sectional view of the flow amount adjustment mechanism according to the third embodiment, and a view of a condition where the operation portion is depressed all the way in.
FIGS. 17A to 17D are views explaining the operation of the flow amount adjustment mechanism according to the third embodiment, FIG. 17A is a view of the condition where the operation portion is not operated, FIG. 17B is a view of a condition where the operation portion is operated approximately 1/3 the way, FIG. 17C is a view of a condition where the operation portion is operated approximately 2/3 the way, and FIG. 17D is a view of a condition where the operation portion is fully operated.
FIGS. 18A and 18B are views explaining a stepwise adjustment of the flow channel area according to the third embodiment, FIG. 18A is a view of a condition where the flow amount of the air is controlled by the change of the clearance amount at a throttle portion, and FIG. 18B is a view of the condition where the flow amount of the air is controlled by the change of the opening amount of the opening portion.
FIG. 19 is a graph showing a relationship between the operation amount, and the flow amount and the flow channel area according to the third embodiment.
FIG. 20 is a graph showing the relationship between the operation amount, and the flow amount and the flow channel area when a release valve or a pipe line is formed in a simple tapered shape.

### DETAILED DESCRIPTION OF EXEMPLARY EMBODIMENTS

### (First embodiment)

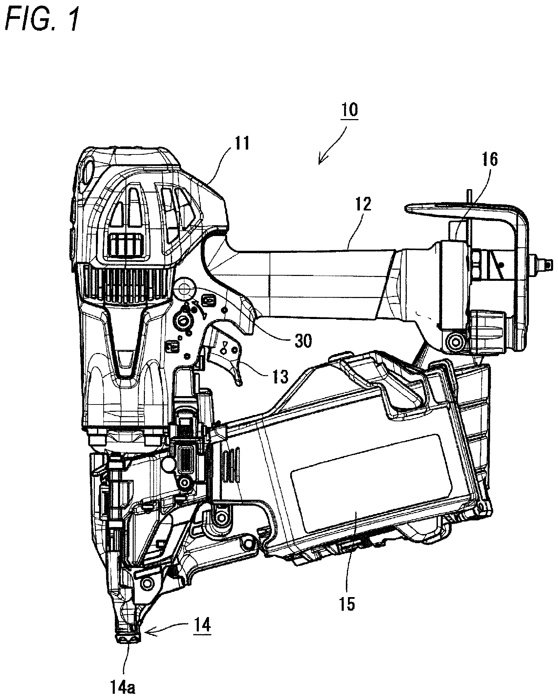

A first embodiment of the present invention will be described with reference to FIGS. 1 to 10.

The driving tool 10 according to the present embodiment ejects a fastener by using externally supplied compressed air, and is provided with an air duster structure that jets air out of a nozzle 17b by using this externally supplied compressed air. By thus providing the driving tool 10 with the air duster structure, driving by the fastener and cleaning by the air duster can be performed without exchanging tools.

As shown in FIG. 1, this driving tool 10 is provided with a tool body 11 having a striking mechanism inside, a grip 12 provided so as to protrude from the tool body 11 in an orthogonal direction, a trigger 13 provided on the grip 12 so as to be operable, a nose portion 14 provided so as to protrude on the tip of the tool body 11, a magazine 15 connected in the rear of the nose portion 14, and an operation portion 30 provided so as to be depressable in order to actuate the air duster structure.

The striking mechanism incorporated in the tool body 11 actuates a driver (which is a fastener driving member) by using the force of the compressed air. The driver is movable in the direction toward the nose portion 14 in order to eject a fastener. The driver having moved in the driving direction ejects a fastener that is set inside the nose portion 14. The fastener ejected by the driver is ejected from an ejection hole 14a that is open at the tip of the nose portion 14.

When this driving tool 10 is used, the grip 12 is gripped and grasped, and the trigger 13 is pulled. By this operation, the above-described striking mechanism is actuated to eject a fastener.

In the magazine 15, a connection fastener is accommodated, and the foremost fasteners of this connection fastener are successively supplied in the direction toward the nose portion 14 (immediately below the driver before the driving operation) .

The compressed air for actuating the above-described striking mechanism and air duster structure is supplied from an air supply source such as an air compressor. Specifically, an air hose for supplying air connected to a compressor or the like is connected to an end cap portion 16 provided on the rear end of the grip 12, and the compressed air is supplied through this air hose. The compressed air supplied from the end cap portion 16 passes through an air supply channel formed inside the grip 12, and is supplied to the striking mechanism or to the air duster structure.

In the striking mechanism, when the trigger 13 is operated, the compressed air is supplied into a striking cylinder, this compressed air acts on a striking piston to drive the striking piston, and the driver coupled to the striking piston drives a nail.

In the air duster structure, when the operation portion 30 is operated, the compressed air is jetted out of the nozzle 17b that is open in the neighborhood of the nose portion 14. As shown in FIG. 1, the operation portion 30 according to the present embodiment is disposed in a position where it can be operated with the hand grasping the grip 12 when the worker grasps the grip 12. Specifically, it is disposed in a position where it can be operated with the thumb of the right hand when the grip 12 is gripped with the right hand.

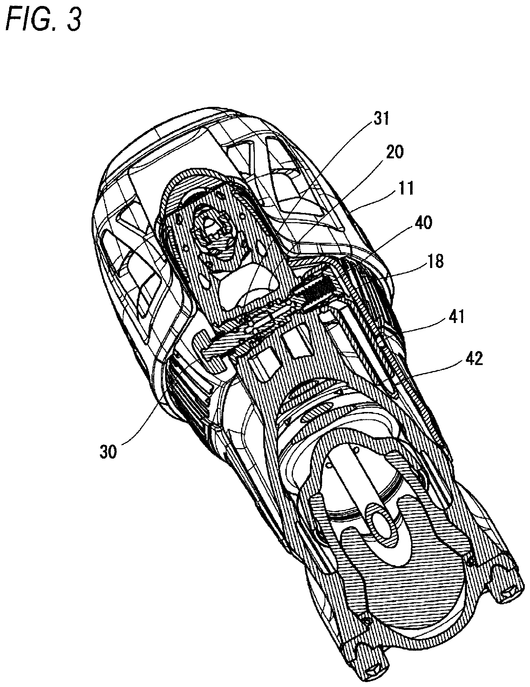

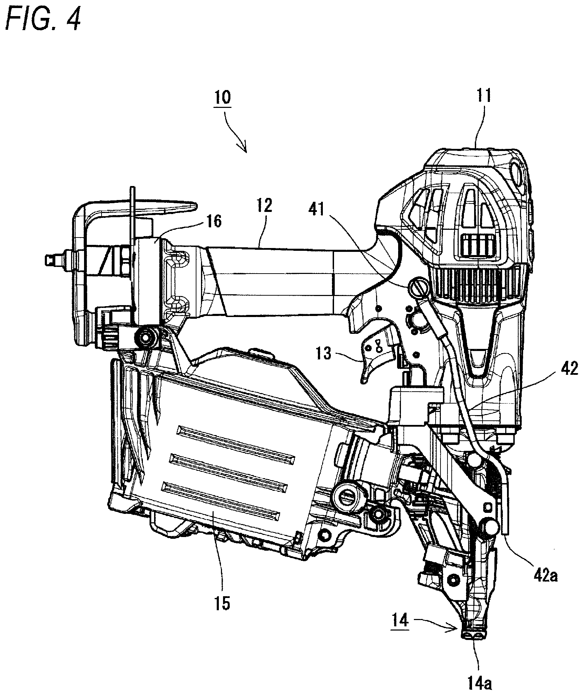

As shown in FIGS. 3 and 4, the above-described air duster structure is provided with a flow amount adjustment mechanism provided inside the housing of the tool body 11. On the downstream side of this flow amount adjustment mechanism, an air outlet 40 for taking out air to the outside of the housing is provided. To this air outlet 40, a duster pipe arrangement 42 extending in a direction toward the tip of the tool body 11 (that is, a direction toward the nose portion 14) is connected. More specifically, the duster pipe arrangement 42 is connected through a joint part 41 rotatably provided between it and the air outlet 40.

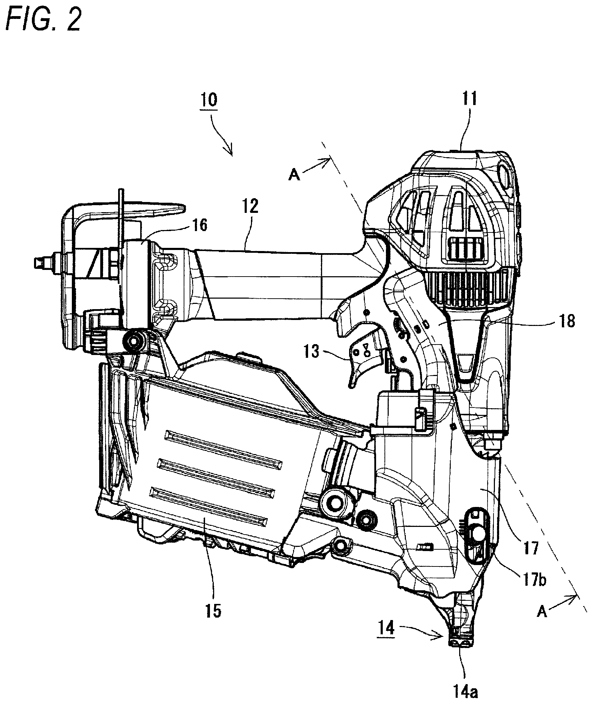

The air outlet 40 is disposed on a side surface of the tool body 11 on the side opposite to the operation portion 30. While the duster pipe arrangement 42 and the joint part 41 connected to the air outlet 40 are disposed outside the housing of the tool body 11, as shown in FIG. 2, they are covered with a tip cover member 17 covering the tip of the tool body 11 and a side cover member 18 disposed in a position covering the air outlet 40.

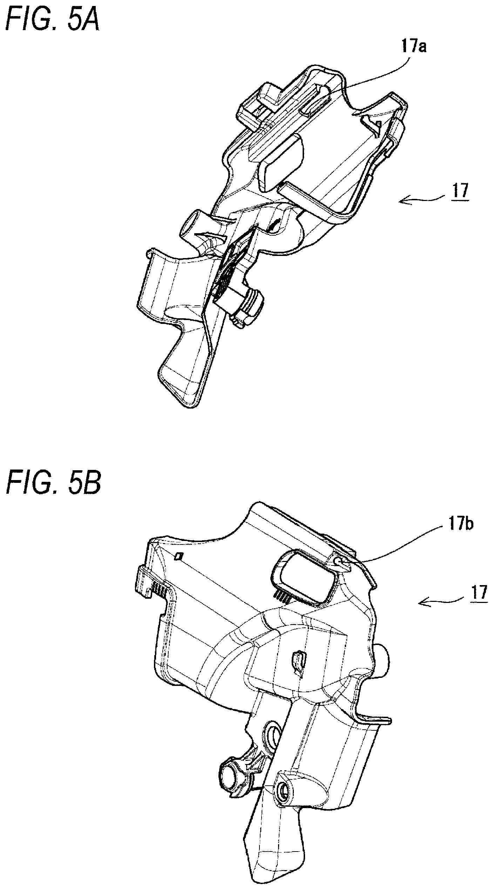

On the reverse side of the tip cover member 17, as shown in FIG. 5A, a pipe arrangement holding portion 17a holding a tip portion 42a of the duster pipe arrangement 42 is provided, and by this, the tip portion 42a of the duster pipe arrangement 42 is fixed by the tip cover member 17. The duster pipe arrangement 42 is easily assembled to the pipe arrangement holding portion 17a since it is a flexible tube made of a resin or the like and elastically deformable.

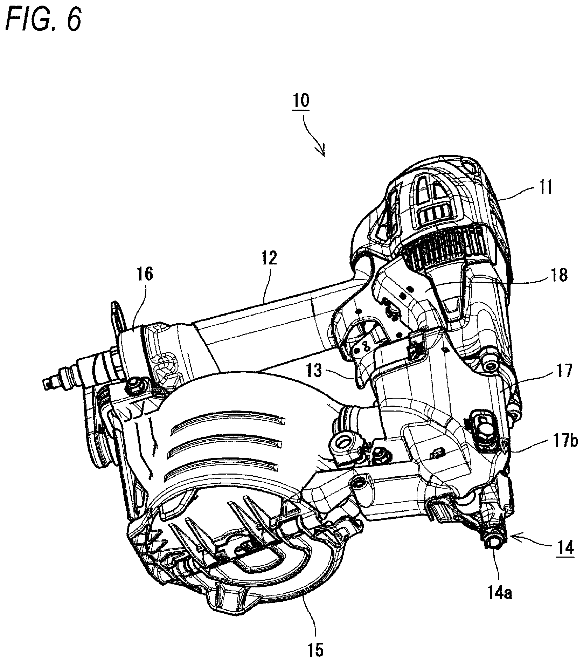

On the obverse side of the tip cover member 17, as shown in FIGS. 5B and 6, the air nozzle 17b is open. This air nozzle 17b communicates with the above-described pipe arrangement holding portion 17a. By this provision, on the tip cover member 17, of the air nozzle 17b communicating with the duster pipe arrangement 42, air is jetted out of this nozzle 17b when the operation portion 30 is operated.

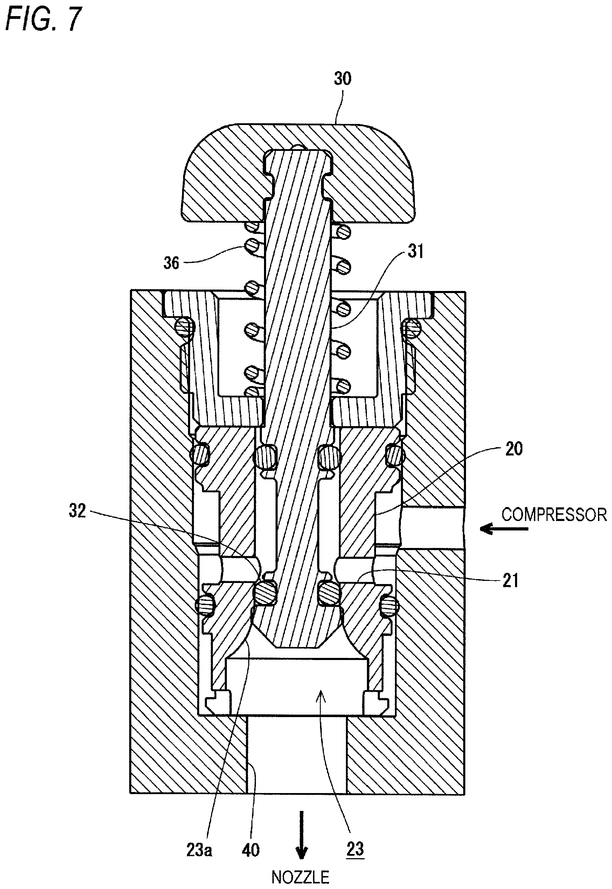

The flow amount adjustment mechanism is for adjusting the amount of air jetted out of the nozzle 17b, and as shown in FIG. 7, is provided with a pipe line formation portion 20 forming a pipe line 23 for circulating air, a valve member 31 disposed within the pipe line 23 and movable, the operation portion 30 disposed on the tip of the valve member 31 so as to be operable, and a valve member pushing member 36 that pushes the valve member 31 in the protruding direction. Into this flow amount adjustment mechanism, the compressed air can be introduced from the upstream side, and when the air supply source such as an air compressor and the tool body 11 are connected together, the compressed air is supplied to the upstream side at all times. On the downstream side of this flow amount adjustment mechanism, the air outlet 40 to which the duster pipe arrangement 42 (the joint part 41) is connectable is open.

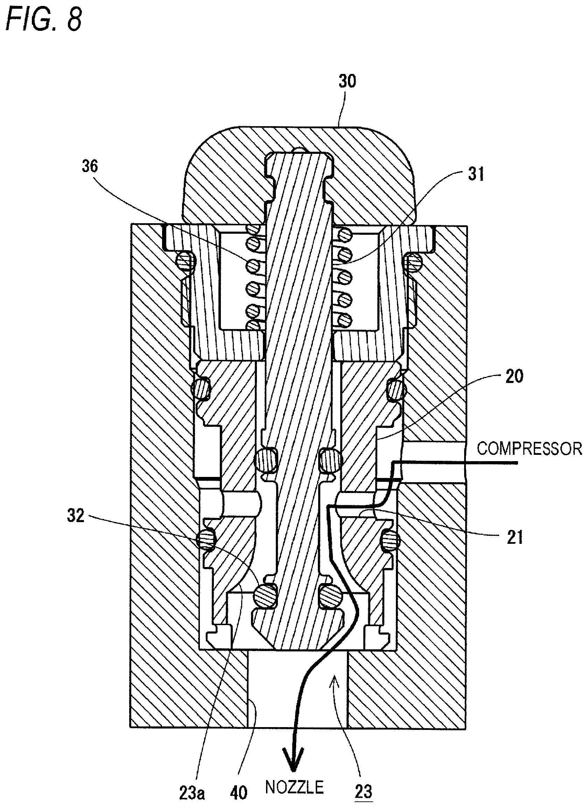

The pipe line formation portion 20 has a hollow portion forming the pipe line 23, and as shown in FIG. 8, is structured so as to take the compressed air into the pipe line 23 through an upstream opening portion 21 that is open toward the upstream side. On the downstream side of the upstream opening portion 21, a throttle portion 23a is provided that controls the flow amount of the air in the pipe line 23 by gradually changing the amount of clearance between the pipe line 23 and the valve member 31 when the valve member 31 moves. This throttle portion 23a is formed, as shown in FIGS. 7 and 8, in a tapered shape (a trumpet shape) such that the width of the opening (the diameter of the cross section) increases at an accelerated rate toward the movement direction of the valve member 31, and is structured so that when the valve member 31 moves in a direction that opens the pipe line 23, the amount of clearance is increased at an accelerated rate.

To "increase at an accelerated rate" referred to here means not that the flow channel area increases proportionally to the movement amount of the valve member 31 when the valve member 31 moves in the opening direction but that the flow channel area increases more rapidly than proportionally.

The "amount of clearance" referred to here means the length of the gap between the pipe line 23 and the valve member 31.

The valve member 31 is structured so as to slide along with the depression of the operation portion 30. While the valve member 31 is pushed in the protruding direction by the valve member pushing member 36 under natural conditions, when the operation portion 30 is depressed against the pushing force of the valve member pushing member 36, the valve member 31 moves in the direction that opens the pipe line 23. In the present embodiment, a tip sealing member 32 formed of an O ring or the like is attached to the tip of the valve member 31, and under natural conditions, the pipe line 23 is closed by this tip sealing member 32 abutting on the throttle portion 23a. When the valve member 31 moves in the direction that opens the pipe line 23, a clearance occurs between the tip sealing member 32 and the throttle portion 23a, and by this clearance, the flow amount of the air in the pipe line 23 is controlled. Then, when the valve member 31 opens the pipe line 23, air is released from the air outlet 40, and air is jetted out of the nozzle 17b. In the present embodiment, it is unnecessary to dispose the duster pipe arrangement 42 inside the housing since the valve member 31 and the air outlet 40 are disposed in the pushing direction of the operation portion 30 and the air outlet 40 is formed on the side opposite to the operation portion 30.

According to this structure, since the flow channel area of the throttle portion 23a rapidly increases as the operation amount of the operation portion 30 increases, even if the difference in pressure between in front of and behind the throttle portion 23a becomes small by operating the operation portion 30 to a certain extent, the decrease in the flow amount because of the decrease in the pressure difference can be compensated by the increase in the flow channel area, so that the relationship between the operation amount of the operation portion 30 and the amount of air jetted out of the nozzle 17b can be made close to a proportional relationship.

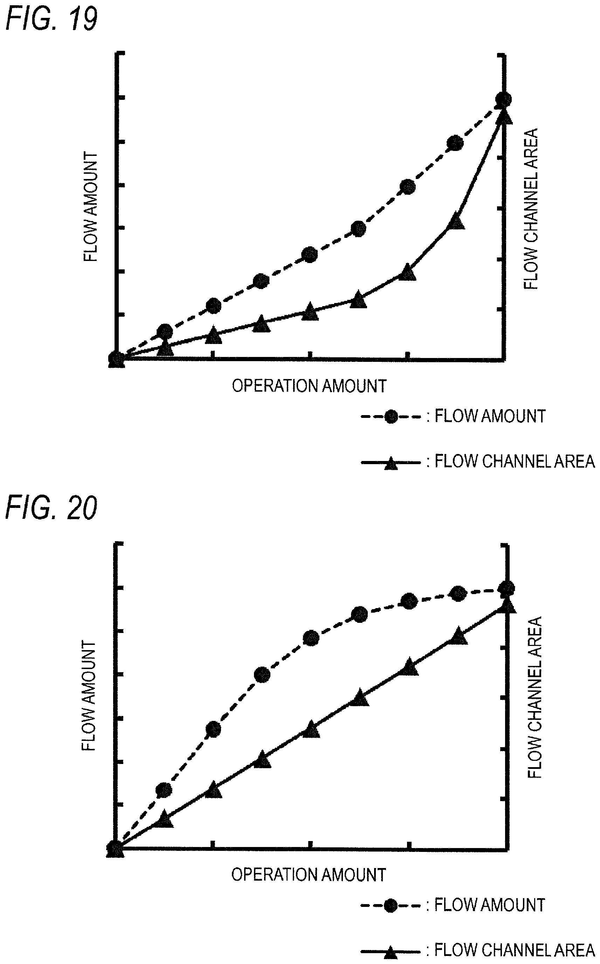

That is, when the throttle portion 23a is formed not in the trumpet shape but in a simple tapered shape (conical surface), as shown in FIG. 20, as the flow amount of the air increases, the pressure in the accumulator provided on the upstream side of the release valve decreases and the pressure difference between in front of and behind the throttle of the release valve becomes small, so that the change in the flow amount with respect to the change in the operation amount becomes small. For this reason, after the operation portion 30 is operated to a certain extent, the amount of air jetted out of the nozzle 17b does not largely change even if the operation portion 30 is operated any further and this deteriorates operability.

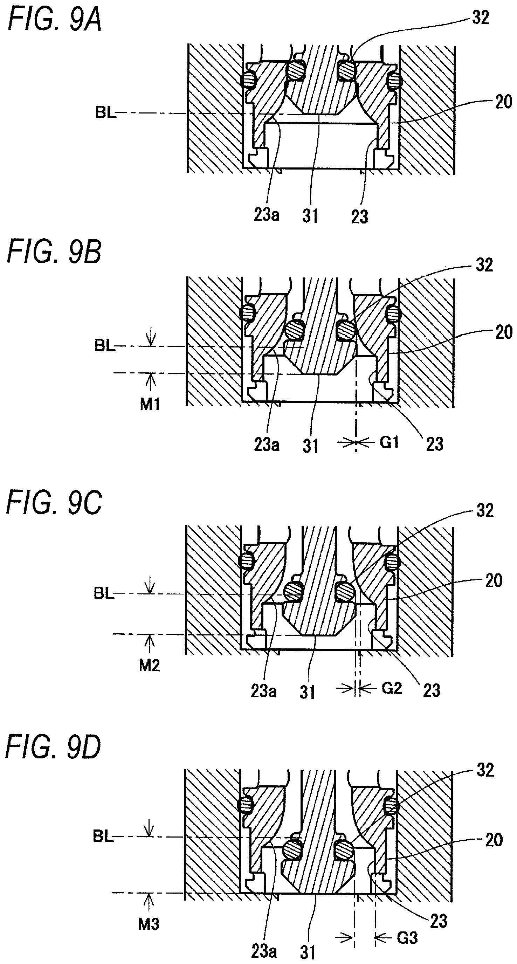

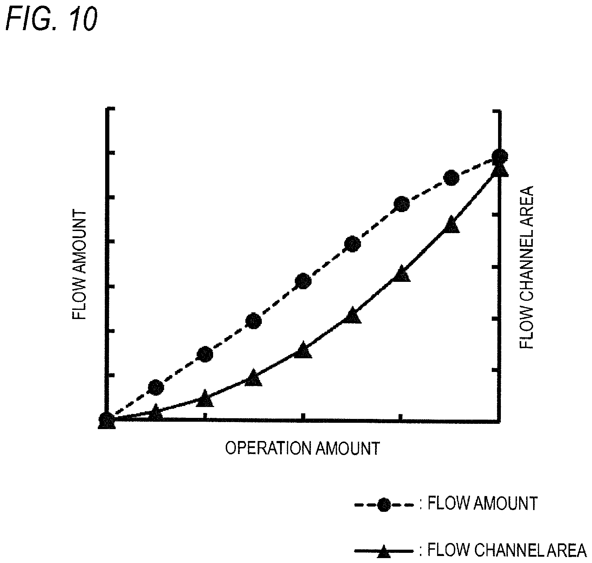

In this regard, according to the present embodiment, as shown in FIGS. 9A to 9D, since operation amounts M1 to M3 of the operation portion 30 are not proportional to the clearance amounts G1 to G3, it is possible to make the flow channel area very small at the start of the operation of the operation portion 30 and make the flow channel area very large at the end of the operation of the operation portion 30. Specifically, when the operation portion 30 is operated by the predetermined operation amount M1 from an initial position BL of the valve member 31 where the flow channel is closed (see FIG. 9A), the clearance amount is G1 (see FIG. 9B). When the operation portion 30 is operated by twice the predetermined operation amount M1 (M2) from the initial position BL of the valve member 31, the clearance amount is G2 (see FIG. 9C). When the operation portion 30 is operated by three times the predetermined operation amount M1 (M3) from the initial position BL of the valve member 31, the clearance amount is G3 (see FIG. 9C) . In the case of a simple tapered shape (a conical surface), G2 should be twice G1, and G3 should be three times G1; however, in the present embodiment, since the clearance amount increases at an accelerated rate with respect to the operation amount of the operation portion 30, G2 is not less than twice G1, and G3 is not less than three times G1. As described above, the present embodiment is purposefully structured so that the flow channel area largely increases extremely toward the rear. Therefore, even when the pressure difference between in front of and behind the throttle portion 23a becomes small by operating the operation portion 30 to a certain extent and the pressure to jet out the air decreases, the decrease in the pressure can be compensated by the increase in the flow channel area, so that as shown in FIG. 10, the relationship between the operation amount of the operation portion 30 and the amount of air jetted out of the nozzle 17b can be made close to a proportional relationship.

### (Second embodiment)

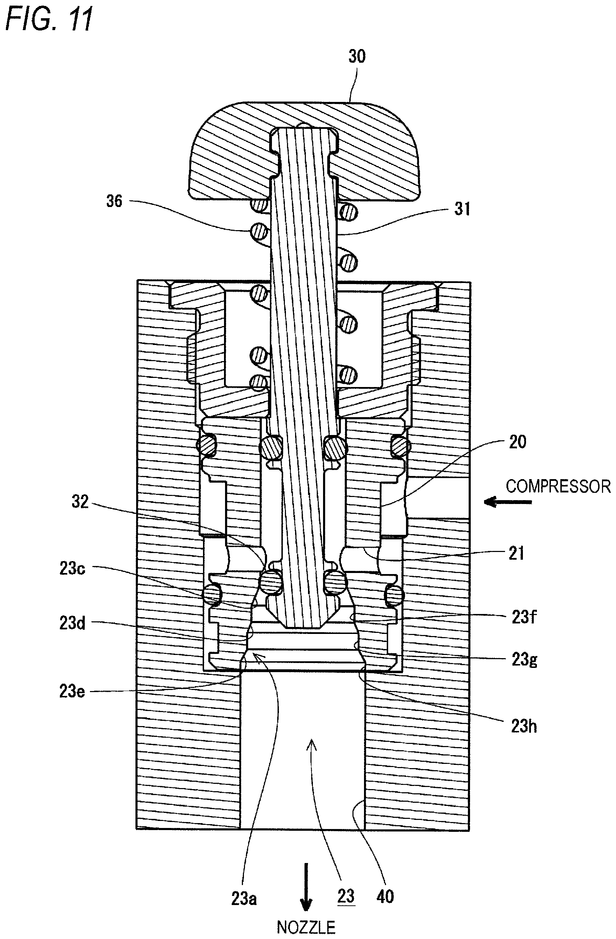

A second embodiment of the present invention will be described with reference to FIGS. 11 to 14. Since the present invention is different from the first embodiment only in the structure of the flow amount adjustment mechanism, overlapping descriptions are avoided and only the flow amount adjustment mechanism will be described.

The flow amount adjustment mechanism according to the present embodiment is for adjusting the amount of air jetted out of the nozzle 17b, and as shown in FIG. 11, is provided with the pipe line formation portion 20 forming the pipe line 23 for circulating air, the valve member 31 disposed within the pipe line 23 and movable, the operation portion 30 disposed on the tip of the valve member 31 so as to be operable, and the valve member pushing member 36 that pushes the valve member 31 in the protruding direction. Into this flow amount adjustment mechanism, the compressed air can be introduced from the upstream side, and when the air supply source such as an air compressor is connected to the tool body 11, the compressed air is supplied to the upstream side at all times . On the downstream side of this flow amount adjustment mechanism, the air outlet 40 to which the duster pipe arrangement 42 (the joint part 41) is connectable is open.

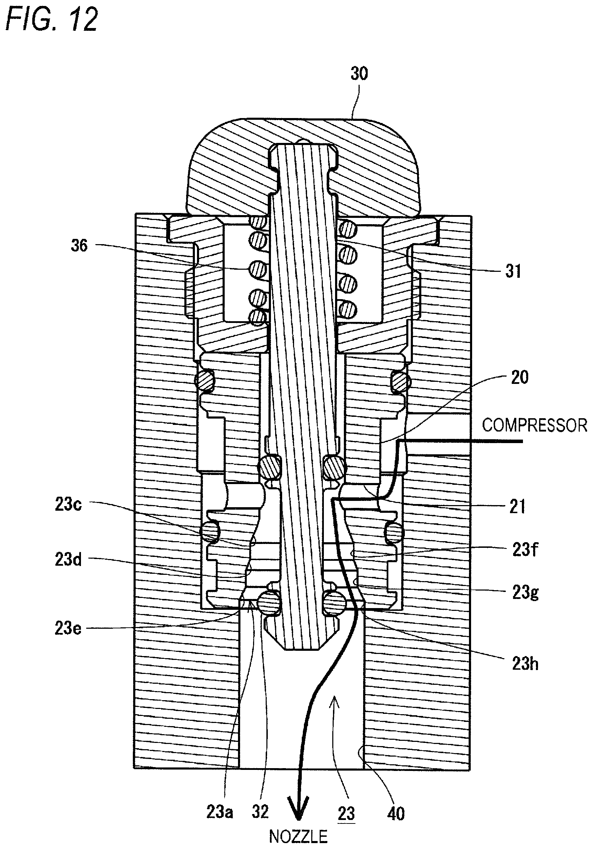

The pipe line formation portion 20 has a hollow portion forming the pipe line 23, and as shown in FIG. 12, is structured so as to take the compressed air into the pipe line 23 through the upstream opening portion 21 that is open toward the upstream side. On the downstream side of the upstream opening portion 21, the throttle portion 23a is provided that controls the flow amount of the air in the pipe line 23 by gradually changing the amount of clearance between the pipe line 23 and the valve member 31 when the valve member 31 moves. This throttle portion 23a is formed, as shown in FIGS. 11 and 12, in a stepped shape where tapered portions and cylindrical portions are alternately arranged. Specifically, the following are provided: a first tapered portion 23c expanding toward the downstream side; a first parallel portion 23f formed in substantially the same diameter as the maximum diameter of the first tapered portion 23c so as to be continuous with the first tapered portion 23c; a second tapered portion 23d expanding toward the downstream side so as to be continuous with the first parallel portion 23f; a second parallel portion 23g formed in substantially the same diameter as the maximum diameter of the second tapered portion 23d so as to be continuous with the second tapered portion 23d; a third tapered portion 23e expanding toward the downstream side so as to be continuous with the second parallel portion 23g; and a third parallel portion 23h formed in substantially the same diameter as the maximum diameter of the third tapered portion 23e so as to be continuous with the third tapered portion 23e. This embodiment is merely an example and the number of steps of the stepped shape may be changed as appropriate.

The valve member 31 is structured so as to slide along with the depression of the operation portion 30. While the valve member 31 is pushed in the protruding direction by the valve member pushing member 36 under natural conditions, when the operation portion 30 is depressed against the pushing force of the valve member pushing member 36, the valve member 31 moves in the direction that opens the pipe line 23. In the present embodiment, the tip sealing member 32 formed of an O ring or the like is attached to the tip of the valve member 31, and under natural conditions, the pipe line 23 is closed by this tip sealing member 32 abutting on the throttle portion 23a. When the valve member 31 moves in the direction that opens the pipe line 23, a clearance occurs between the tip sealing member 32 and the throttle portion 23a, and by this clearance, the flow amount of the air in the pipe line 23 is controlled. Then, when the valve member 31 opens the pipe line 23, air is released from the air outlet 40, and air is jetted out of the nozzle 17b. In the present embodiment, it is unnecessary to dispose the duster pipe arrangement 42 inside the housing since the valve member 31 and the air outlet 40 are disposed in the pushing direction of the operation portion 30.

According to this structure, since the flow channel area can be stepwisely adjusted by the stepped shape, even when the pressure difference between in front of and behind the throttle portion 23a becomes small by operating the operation portion 30 to a certain extent and the pressure to jet out the air decreases, the decrease in the pressure can be compensated by the increase in the flow channel area, so that the relationship between the operation amount of the operation portion 30 and the amount of air jetted out of the nozzle 17b can be made close to a proportional relationship.

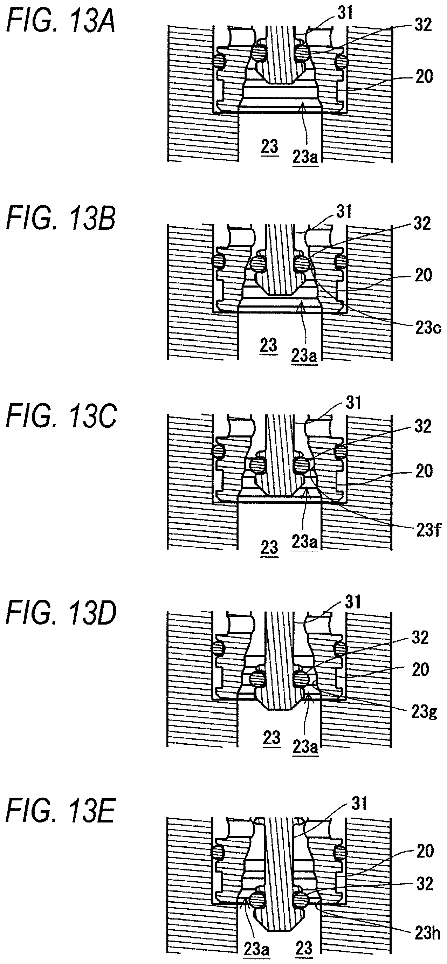

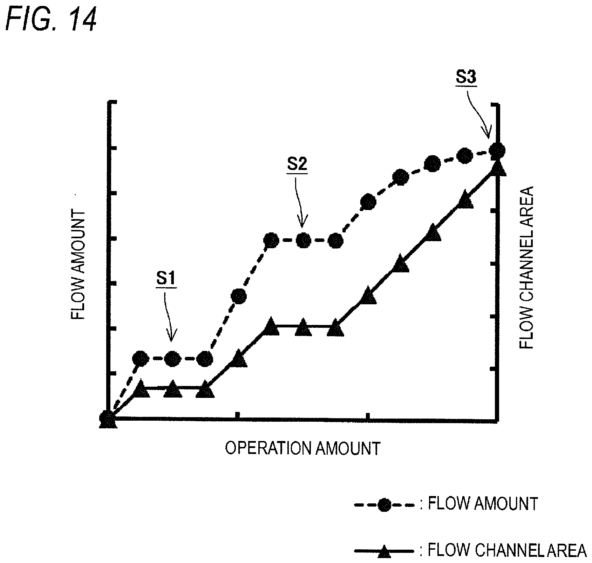

That is, according to the present embodiment, as shown in FIG. 13B, when the tip sealing member 32 is moving in a position facing a tapered portion, the amount of clearance between the tip sealing member 32 and the throttle portion 23a increases little by little, whereas as shown in FIGS. 13C, 13D and 13E, when the tip sealing member 32 faces a parallel portion, the amount of clearance between the tip sealing member 32 and the throttle portion 23a does not change. For this reason, by adjusting the intervals and the diameters of the tapered portions and the parallel portions, the relationship between the operation amount of the operation portion 30 and the flow channel area can be easily set and changed. For this reason, even when the pressure difference between in front of and behind the throttle portion 23a becomes small by operating the operation portion 30 to a certain extent and the pressure to jet out the air decreases, the decrease in the pressure can be compensated by the increase in the flow channel area, so that as shown in FIG. 14, the relationship between the operation amount of the operation portion 30 and the amount of air jetted out of the nozzle 17b can be made close to a proportional relationship.

Moreover, by stepwisely adjusting the flow channel area, it is made easy to keep constant the amount of air jetted out of the nozzle 17b. For example, as shown in FIG. 13C, in a range where the tip sealing member 32 faces the first parallel portion 23f, as shown at S1 in FIG. 14, even if the operation amount of the operation portion 30 changes in some degree, the amount of air jetted out of the nozzle 17b is kept substantially constant. Likewise, as shown in FIG. 13D, in a range where the tip sealing member 32 faces the second parallel portion 23g, as shown at S2 in FIG. 14, even if the operation amount of the operation portion 30 changes in some degree, the amount of air jetted out of the nozzle 17b is kept substantially constant. Moreover, as shown in FIG. 13E, when the tip sealing member 32 is operated to a position where the tip sealing member 32 faces the third parallel portion 23h (to the bottom dead point), as shown at S3 in FIG. 14, the amount of air jetted out of the nozzle 17b is stabilized.

As described above, by making it possible to keep substantially constant the amount of air jetted out of the nozzle 17b even if the operation amount of the operation portion 30 changes in some degree, the amount of air jetted out of the nozzle 17b can be kept constant without the user continuing to apply a constant force to the operation portion 30. For example, even in a situation where it is difficult to continue applying a constant force to the operation portion 30 such as a situation where the user uses the machine while shaking the nozzle 17b under a condition where he/she is holding the machine, the amount of air jetted out of the nozzle 17b can be kept constant.

### (Third embodiment)

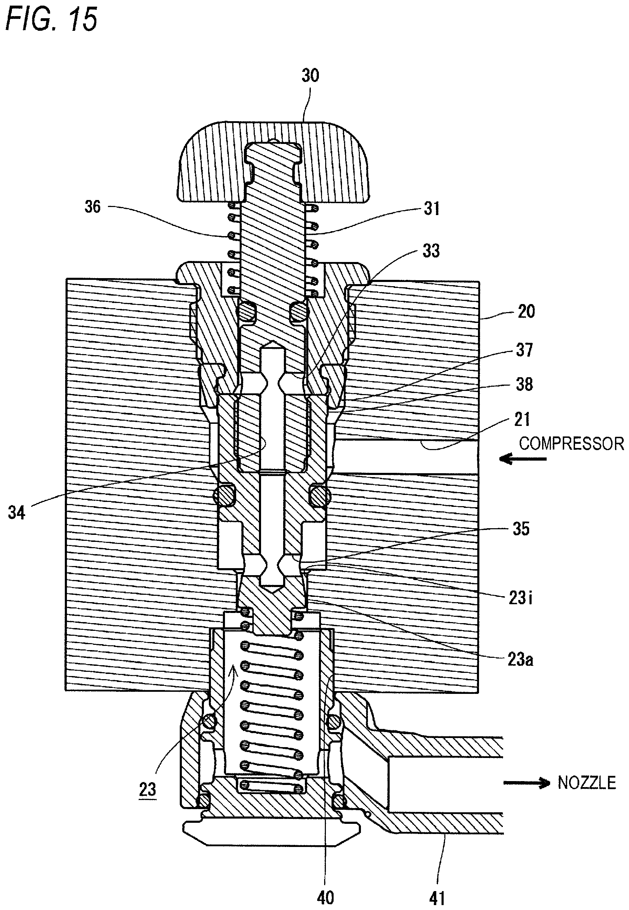

A third embodiment of the present invention will be described with reference to FIGS. 15 to 19. Since the present embodiment is different from the first embodiment only in the structure of the flow amount adjustment mechanism, overlapping descriptions are avoided and only the flow amount adjustment mechanism will be described.

The flow amount adjustment mechanism according to the present embodiment is for adjusting the amount of air jetted out of the nozzle 17b, and as shown in FIG. 15, is provided with the pipe line formation portion 20 forming the pipe line 23 for circulating air, the valve member 31 disposed within the pipe line 23 and movable, the operation portion 30 disposed on the tip of the valve member 31 so as to be operable, the valve member pushing member 36 that pushes the valve member 31 in the protruding direction, and a sealing member 37 that abuts the valve member 31 to seal the air. Into this flow amount adjustment mechanism, the compressed air can be introduced from the upstream side, and when the air supply source such as an air compressor is connected, the compressed air is supplied to the upstream side at all times. On the downstream side of this flow amount adjustment mechanism, the air outlet 40 to which the duster pipe arrangement 42 (the joint part 41) is connectable is open.

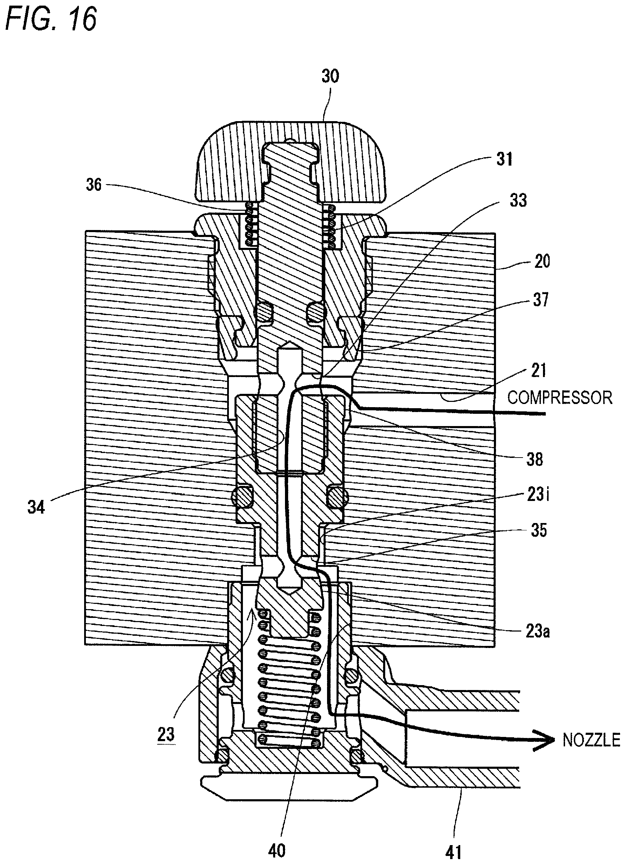

The pipe line formation portion 20 has a hollow portion forming the pipe line 23, and in the present embodiment, part of the housing of the tool body 11 is made the pipe line formation portion 20. That is, in the housing of the tool body 11, a through hole that passes through in a direction orthogonal to the driving direction of the fastener is formed, and the pipe line 23 is formed of this through hole. This pipe line formation portion 20 is structured, as shown in FIG. 16, so as to take in the compressed air into the pipe line 23 from the upstream opening portion 21 that is open toward the upstream side. This pipe line formation portion 20 is provided with a blocking portion 23i capable of adjusting the opening amount of an opening portion 35 described later. The blocking portion 23i has a cylinder inner surface shape facing the outer peripheral surface of the valve member 31.

The valve member 31 is structured so as to slide along with the depression of the operation portion 30. While the valve member 31 is pushed in the protruding direction by the valve member pushing member 36 under natural conditions, when the operation portion 30 is depressed against the pushing force of the valve member pushing member 36, the valve member 31 moves in the direction that opens the pipe line 23.

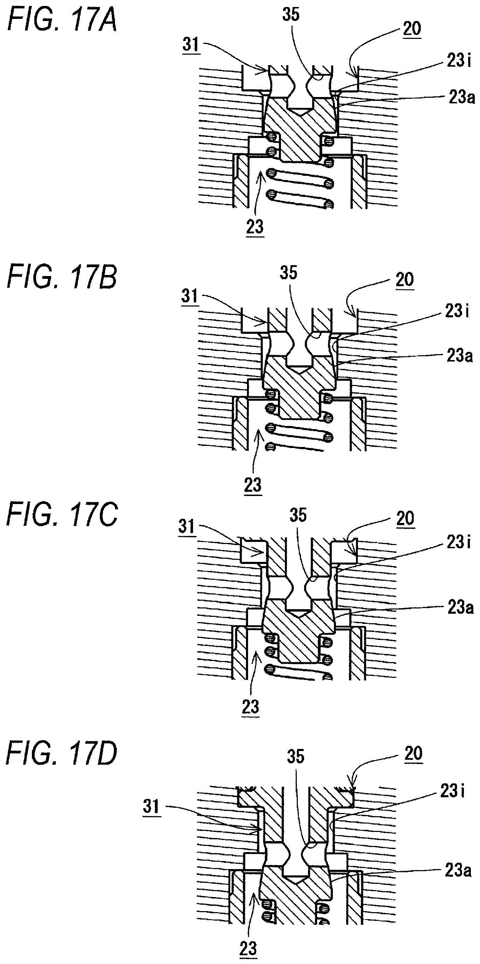

This valve member 31 is hollow and provided with an inner pipe line 34 through which air can pass. On the upstream side of the inner pipe line 34, an intake 33 for taking in the compressed air is provided, and on the downstream side of the inner pipe line 34, the opening portion 35 for discharging the compressed air toward the air outlet 40 is provided. The compressed air supplied from the air supply source flows into the inner pipe line 34 from the intake 33, and passes through the opening portion 35 to flow in a direction toward the air outlet 40. The opening portion 35 is open in a direction orthogonal to the movement direction of the valve member 31, and can face the blocking portion 23i of the pipe line formation portion 20. Specifically, this opening portion 35 is provided, as shown in FIGS. 17A to 17D, continuously with the throttle portion 23a described later, and after the valve member 31 moves and the throttle portion 23a passes the blocking portion 23i, the opening portion 35 faces the blocking portion 23i.

On the downstream side of this opening portion 35, the throttle portion 23a is provided that controls the flow amount of the air in the pipe line 23 by gradually changing the amount of clearance between the pipe line 23 and the valve member 31 when the valve member 31 moves. While the throttle portion 23a is formed by tapering the outer peripheral surface of the valve member 31 in the present embodiment, the present invention is not limited thereto; the throttle portion 23a may be formed by tapering the inner peripheral surface of the pipe line 23 or a stepped shape may be used instead of the tapered shape.

In the present embodiment, the sealing member 37 formed of an O ring or the like is fixed to the housing side of the tool body 11. Under natural conditions, as shown in FIG. 15, this sealing member 37 abuts on the outer peripheral surface (a sealing surface 38) of the valve member 31 to seal so that no air flows into the intake 33. When the valve member 31 moves in the direction that opens the pipe line 23, the sealing state of the sealing member 37 and the sealing surface 38 is released, so that air is supplied from the intake 33 to the inner pipe line 34. The flow amount of the air supplied to the inner pipe line 34 is controlled by the change in the clearance amount at the throttle portion 23a and the change in the opening amount of the opening portion 35. The air having its flow amount controlled is released from the air outlet 40 and jetted out of the nozzle 17b. In the present embodiment, it is unnecessary to dispose the duster pipe arrangement 42 inside the housing since the valve member 31 and the air outlet 40 are disposed in the pushing direction of the operation portion 30 and the air outlet 40 is formed on the side opposite to the operation portion 30.

According to this structure, since the flow channel area can be stepwisely adjusted by the flow amount adjustment at two places, even when the pressure difference between in front of and behind the throttle portion 23a becomes small by operating the operation portion 30 to a certain extent and the pressure to jet out the air decreases, the decrease in the pressure can be compensated by the increase in the flow channel area, so that the relationship between the operation amount of the operation portion 30 and the amount of air jetted out of the nozzle 17b can be made close to a proportional relationship.

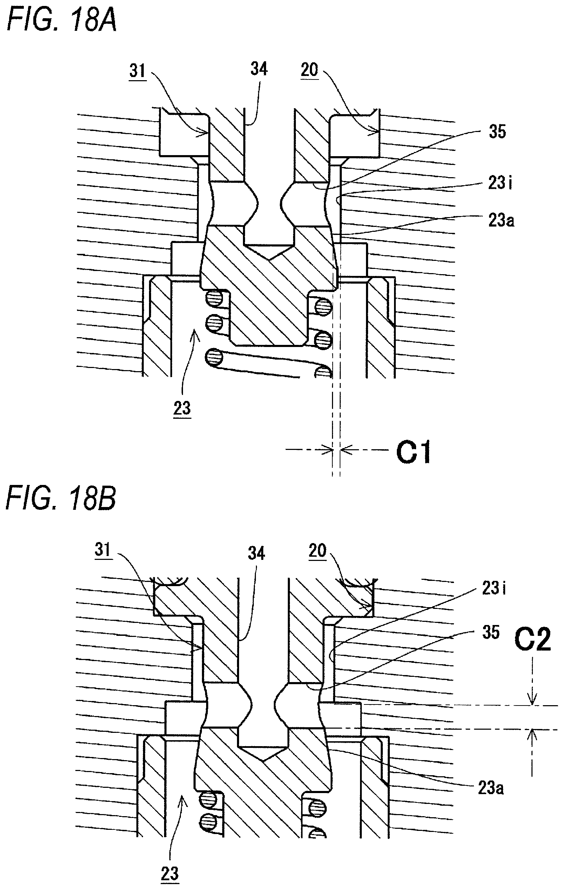

That is, according to the present embodiment, as shown in FIGS. 17A to 17C, since the opening portion 35 is blocked until the operation portion 30 is operated and moves to a predetermined position, the flow amount adjustment is performed only by the throttle portion 23a. At this stage, as shown in FIG. 18A, the flow amount of the air is controlled by the change in the amount of clearance between the throttle portion 23a and the blocking portion 23i. Then, as shown in FIG. 17D, when the operation portion 30 is further operated and moves to the predetermined position, part of the opening portion 35 moves to the downstream side of the blocking portion 23i, so that the air flows directly to the downstream side from the opening portion 35. At this stage, the flow amount adjustment by the throttle portion 23a is not performed, and as shown in FIG. 18B, the flow amount of the air is controlled by the change in the opening amount of the opening portion 35.

According to this structure, the flow amount of the air can be increased as a stretch when the operation portion 30 is operated to a certain extent. For this reason, even when the pressure difference between in front of and behind the throttle portion 23a becomes small by operating the operation portion 30 to a certain extent and the pressure to jet out the air decreases, the decrease in the pressure can be compensated by the increase in the flow channel area, so that as shown in FIG. 19, the relationship between the operation amount of the operation portion 30 and the amount of air jetted out of the nozzle 17b can be made close to a proportional relationship.

While in the above-described embodiment, the flow amount of the air in the pipe line 23 is controlled by the change in the clearance amount at the throttle portion 23a and the change in the opening amount of the opening portion 35, the method of adjusting the flow channel area by the flow amount adjustment at two places is not limited thereto. That is, at least two throttle portions where the flow channel area change amounts with respect to the movement amount of the valve member 31 are different may be provided. For example, a throttle portion where the change in the flow channel area is small and a throttle portion where the change is large may be combined. Specifically, by providing two or more tapered throttle portions as described in the first embodiment and making the angles of the tapered surfaces of the throttle portions different from each other, the flow channel area change amounts with respect to the movement amount of the valve member 31 can be made different from each other.

In the above-described embodiment, the opening portion 35 is provided on the valve member 31, and the blocking portion 23i is provided on the pipe line formation portion 20 (the pipe line 23). However, the opening portion 35 may be provided on the pipe line formation portion 20 (the pipe line 23), and the blocking portion 23i may be provided on the valve member 31.

## Claims

1. A driving tool (10) which includes an air duster structure that is configured to jet air out of a nozzle (17b) by using externally supplied compressed air, the driving tool (10) comprising:
a tool body (11) having a striking mechanism inside;
a grip (12) protruding from the tool body 11 in an orthogonal direction;
a nose portion (14) protruding on a tip of the tool body (11), the nose portion (14) having an ejecting hole (14a) from which a fastener is ejected;
an operation portion (30) disposed in a position such that it can be depressed with a finger of a user's hand grasping the grip (12);
a valve member (31) provided with the operation portion (30), wherein the valve member is structured so as to slide along with the depression of the operation portion (30); and
an air outlet (40) which is configured to release air to an outside of a housing of the tool body (11),
wherein the nozzle (17b) is open in the neighborhood of the nose portion (14) when the operation portion (30) is operated, **characterised in that** the tool futher comprises
a duster pipe arrangement (42) connecting to the air outlet (40) and the nozzle (17b), wherein the duster pipe arrangement (42) is disposed outside the housing of the tool body (11).

2. The driving tool (10) according to claim 1, wherein
one end of the duster pipe arrangement (42) is connected to the air outlet (40) through a joint part (41) rotatably provided on a side surface of the housing of the tool body, and
the other end of the duster pipe arrangement (42) is fixed by a tip cover member (17) covering a tip of the tool body (11) and is configured to communicate with the nozzle (17b) provided on the tip cover member (17).

3. The driving tool (10) according to claim 1 or 2, wherein
the duster pipe arrangement (42) is a flexible tube which is elastically deformable.

4. The driving tool (10) according to any one of claims 1 to 3, further comprising:
a flow amount adjustment mechanism configured to adjust an amount of air jetted out of the nozzle (17b).

5. The driving tool (10) according to any one of claims 1 to 4, wherein
the flow amount adjustment mechanism is configured to adjust the amount of air jetted out of the nozzle (17b) in accordance with an operation amount of the operation portion (30).

6. The driving tool (10) according to any one of claims 1 to 5, wherein
the valve member and the air outlet (40) are disposed in a pushing direction of the operation portion (30).

## Patentansprüche

1. Eintreibwerkzeug (10), das eine Luftblaspistolenstruktur enthält, das so eingerichtet ist, dass es unter Verwendung von extern zugeführter Druckluft Luft aus einer Düse (17b) ausstößt, wobei das Eintreibwerkzeug (10) umfasst:
einen Werkzeugkörper (11) mit einem Schlagmechanismus im Inneren;
einen Griff (12), der in orthogonaler Richtung aus dem Werkzeugkörper 11 herausragt;
einen Nasenabschnitt (14), der an einer Spitze des Werkzeugkörpers (11) vorsteht, wobei der Nasenabschnitt (14) ein Ausstoßloch (14a) aufweist, aus dem ein Befestigungselement ausgestoßen wird;
einen Betätigungsabschnitt (30), der in einer solchen Position angeordnet ist, dass er mit einem Finger einer den Griff (12) ergreifenden Hand des Benutzers gedrückt werden kann;
ein Ventilelement (31), das mit dem Betätigungsabschnitt (30) versehen ist, wobei das Ventilelement so strukturiert ist, dass es beim Drücken des Betätigungsabschnitts (30) gleitet; und
einen Luftauslass (40), der so konfiguriert ist, dass er Luft an die Außenseite eines Gehäuses des Werkzeugkörpers (11) abgibt,
wobei die Düse (17b) in der Nähe des Nasenabschnitts (14) offen ist, wenn der Betätigungsabschnitt (30) betätigt wird, **dadurch gekennzeichnet, dass** das Werkzeug ferner umfasst
eine Düsenleitungsanordnung (42), die mit dem Luftauslass (40) und der Düse (17b)
verbunden ist, wobei die Düsenleitungsanordnung (42) außerhalb des Gehäuses des Werkzeugkörpers (11) angeordnet ist.

2. Eintreibwerkzeug (10) nach Anspruch 1, wobei
ein Ende der Düsenleitungsanordnung (42) mit dem Luftauslass (40) durch ein Verbindungsteil (41), das drehbar an einer Seitenfläche des Gehäuses des Werkzeugkörpers vorgesehen ist, verbunden ist und
das andere Ende der Düsenleitungsanordnung (42) durch ein Spitzenabdeckungselement (17), das eine Spitze des Werkzeugkörpers (11) abdeckt, befestigt ist und so konfiguriert ist, dass es mit der Düse (17b) in Verbindung steht, die an dem Spitzenabdeckungselement (17) vorgesehen ist.

3. Eintreibvorrichtung (10) nach Anspruch 1 oder 2, bei der
die Düsenleitungsanordnung (42) ein flexibler Schlauch ist, der elastisch verformbar ist.

4. Eintreibvorrichtung (10) nach einem der Ansprüche 1 bis 3, ferner umfassend:
einen Mechanismus zur Einstellung der Durchflussmenge, der so konfiguriert ist, dass er die aus der Düse (17b) ausgestoßene Luftmenge einstellt.

5. Eintreibvorrichtung (10) nach einem der Ansprüche 1 bis 4, wobei
der Mechanismus zur Einstellung der Durchflussmenge so konfiguriert ist, dass er die aus der Düse (17b) ausgestoßene Luftmenge in Übereinstimmung mit einer Betätigungsmenge des Betätigungsabschnitts (30) einstellt.

6. Eintreibgerät (10) nach einem der Ansprüche 1 bis 5, wobei
das Ventilelement und der Luftauslass (40) in einer Drückrichtung des Betätigungsabschnitts (30) angeordnet sind.

## Revendications

1. Outil d'entraînement (10) qui comprend une structure de dépoussiéreur pneumatique qui est configurée pour propulser de l'air comprimé hors d'une buse (17b) au moyen d'air comprimé fourni de l'extérieur, l'outil d'entraînement comprenant :
- un corps d'outil (11) ayant un mécanisme de frappe à l'intérieur;
- une poignée (12) saillant du corps d'outil (11) dans une direction orthogonale ;
- une portion de nez (14) saillant à une extrémité du corps d'outil (11), la portion de nez (14) ayant un trou d'éjection (14a) hors duquel une fixation est éjectée ;
- une portion d'actionnement (30) disposée à une position telle qu'elle peut être pressée par un doigt d'une main d'un utilisateur saisissant la poignée (12) ;
- un organe de vanne (31) associé à la portion d'actionnement (30), l'organe de vanne (31) étant configuré de manière à glisser d'après la dépression réalisée sur la portion d'actionnement (30) ; et
- une sortie d'air (40) qui est configurée de manière à délivrer de l'air à un extérieur d'un boîtier du corps d'outil (11),
dans lequel la buse (17b) est ouverte au voisinage de la portion de nez (14) quand la portion d'actionnement (30) est mise en marche, **caractérisé en ce que** l'outil comprend encore :
- un agencement de tuyau de dépoussiéreur (42) relié à la sortie d'air (40) et à la buse (17b), l'agencement de tuyau de dépoussiéreur (42) étant disposé à l'extérieur du boîtier du corps d'outil (11).

2. Outil d'entraînement (10) selon la revendication 1, dans lequel :
- une extrémité de l'agencement de tuyau de dépoussiéreur (42) est reliée à la sortie d'air (40) par une portion de jonction (41) disposée de manière tournante sur une surface latérale du boîtier du corps d'outil ; et
- l'autre extrémité de l'agencement de tuyau de dépoussiéreur (42) est fixée à un organe de couvercle d'extrémité (17) couvrant une extrémité du corps d'outil (11), et est configurée pour communiquer avec la buse (17b) disposée sur l'organe de couvercle d'extrémité (17).

3. Outil d'entraînement (10) selon la revendication 1 ou 2, dans lequel :
- l'agencement de tuyau de dépoussiéreur (42) est un tube flexible qui est déformable élastiquement.

4. Outil d'entraînement (10) selon l'une quelconque des revendications 1 à 3, comprenant encore :
- un mécanisme d'ajustement de quantité de flux, configuré de manière à ajuster une quantité d'air propulsée hors de la buse (17b).

5. Outil d'entraînement (10) selon l'une quelconque des revendications 1 à 4, dans lequel :
- le mécanisme d'ajustement de quantité de flux est configuré de manière à ajuster la quantité d'air propulsée hors de la buse (17b) selon une quantité d'actionnement de la portion d'actionnement (30).

6. Outil d'entraînement (10) selon l'une quelconque des revendications 1 à 5, dans lequel l'organe de vanne et la sortie d'air (40) sont disposés dans une direction de poussée de la portion d'actionnement (30).
